# EUROPÄISCHE PATENTANMELDUNG

(11) **EP 1 049 050 A2**
(43) Veröffentlichungstag der Anmeldung: **02.11.2000**
(21) Anmeldenummer: 00108549.7
(22) Anmeldetag: 19.04.2000
(51) Int. Cl.: G07C 3/00

(54) **Mikrosystem zur lokalen Zustandsüberwachung und Zustandsdiagnose von Maschinen, Anlagen und/oder Baugruppen, insbesondere von Antriebssystemen**

(30) Priorität: 20.07.1999 DE 19933924; 29.04.1999 DE 19919570
(71) Anmelder: Loher Aktiengesellschaft, D-94099 Ruhstorf (DE)
(72) Erfinder: Hermann, Anton, Dipl.-Ing., 94036 Passau (DE); Komprass, Andreas, Dipl.-Ing., 95086 Griesbach (DE); Elender, Gunther, Dr. rer. nat., 94081 Fürstenzell (DE); Marschner, Uwe, Dipl.-Ing., 01640 Coswig (DE); Fischer, Wolf-Joachim, Prof.Dr.-Ing., 01324 Dresden (DE); Jossa, Ingo, Dipl.-Ing., 01609 Gröditz (DE); Zahn, Dietrich, Dipl.-Ing., 01474 Pappritz (DE)
(74) Vertreter: Zinnecker, Armin, Dipl.-Ing.

(57) **Zusammenfassung**

Die Erfindung beschreibt ein Zustandsüberwachungssystem für Antriebssysteme, das auf der Basis der Mikrosystemtechnik ausgeführt ist und wesentliche Betriebsparameter kontinuierlich erfaßt, entsprechend bestimmter, in der Erfindung beschriebener Merkmale auswertet und daraus eine Zustandsdiagnose und Klassifizierung des Antriebssystems durchführt. Eine Klassifizierung des Betriebszustandes kann z.B. durch Einteilung in die Klassen 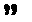 Normal", 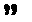 Vorwarnung" und 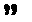 Alarm" erfolgen. Das System eignet sich sowohl zur lokalen, vollkommen autarken Überwachung des Antriebssystems als auch zur Fernüberwachung über Telediagnose oder von einer Leitwarte aus. Das Überwachungssystem erfaßt Daten kontinuierlich in definierten Zeitabständen und speichert diese zur zeitlichen Rekonstruktion einer Schadensentwicklung ab. Für diese Trendspeicherung können die Zeitdaten entsprechend komprimiert oder reduziert werden. Ein spezieller Algorithmus zur Datenreduktion wird vorgeschlagen. Ein Hauptaugenmerk der Erfindung liegt auf der Zustandsüberwachung von Wälzlagern und der Zustandsüberwachung von Elektromotoren. Insbesondere bei Wälzlagern sollen durch geeignete Algorithmen auch verbleibende Restbetriebszeiten abschätzbar sein und die Klassifizierung des Betriebszustandes auch bezüglich dieser verbleibenden Restbetriebszeit erfolgen.

## Beschreibung

Die Erfindung betrifft ein Mikrosystem zur Zustandsüberwachung und/oder Zustandsdiagnose von Maschinen, Anlagen und/oder Baugruppen, insbesondere von Antriebssystemen, insbesondere zur lokalen, automatischen, kontinuierlichen und/oder periodischen Zustandsüberwachung und/oder Zustandsdiagnose nach dem Oberbegriff des Anspruchs 1.

In bisherigen Konzepten zur Instandhaltung von Antriebssystemen wurden regelmäßige Wartungsintervalle vorgesehen. Instandhaltungsarbeiten wurden nach festen Revisionsplänen durchgeführt. Dieses veraltete Konzept zur Instandhaltung von Antrieben wird zunehmend durch Konzepte der zustandsabhängigen Instandhaltung ersetzt. Damit kommt aber auch der Zustandsüberwachung von Antriebssystemen im Hinblick auf eine zunehmende Kostenreduktion bei Wartung und Instandhaltung und im Hinblick auf eine hohe Verfügbarkeit und erforderliche Zuverlässigkeit von Antriebssystemen eine immer größere Bedeutung zu. Auf dem Markt existieren zahlreiche Systeme zur Zustandsüberwachung von Maschinen, Anlagen und/oder Baugruppen und insbesondere von Antriebssystemen. Diese Zustandsüberwachungsysteme, bestehend aus Meßaufnehmer, Meßumformer, als einzelne Aufnehmer- Diagnose- und Ausleseeinheiten oder als integrierte Systeme zur Überwachung von verschiedenen Parametern des überwachten Antriebssystems bzw. der überwachten Maschine, sind in der Regel aus konventionellen Sensoren, konventionellen elektronischen Bausteinen, in Kombination mit Mikrocontrollern und/oder Schnittstellen zu Datenüberwachungsgeräten, wie Computern, Leitwarten, Datenloggern o.ä. zusammengestzt. Der komplexe Aufbau über herkömmliche elektronische Komponenten verursacht hohe Investitionskosten für die Zustandsüberwachung. Damit sind diese Systeme nur in Ausnahmefällen rentabel.

Die Erfindung bezieht sich auf eine kostengünstige und zuverlässige Lösung für ein Überwachungs- und Diagnosesystem, insbesondere für Maschinen, Anlagen und Baugruppen. Diese Überwachung ist zur rechtzeitigen Erkennung von Veränderungen oder Störungen des betrieblichen Verhaltens erforderlich. Durch das frühzeitige Erkennen von Veränderungen oder sich abzeichnenden Störungen können Schäden bei Anlagen mit hohen Sicherheits- oder Verfügbarkeitsanforderungen vermieden und Revisionszeiten im Sinne einer zustandsabhängigen Instandhaltung frühzeitig geplant werden. Eine besondere Rolle spielt dabei die Wälzlagerüberwachung in Antriebssystemen. Nach verschiedenen Studien, [1], [2] sind Lagerschäden die Hauptausfallursache von elektrischen Antriebssystemen. Dabei erlauben gerade Wälzlagerschäden ein sehr frühzeitiges Erkennen von sich abzeichnenden Ausfällen und gestatten damit eine gezielte Planung einer Anlagenrevision. Moderne Diagnosealgorithmen gestatten dabei gleichzeitig eine Abschätzung der verbleibenden Restbetriebszeit. Voraussetzung hierfür ist jedoch die Beobachtung einer zeitlichen Schadensentwicklung u.U. kombiniert mit einem umfangreichen Expertenwissen.

Gegenwärtig sind international Entwicklungen zu verfolgen, die zu den sog. intelligente Sensoren führten, bei denen das Sensorelement oder auch Basissensor und Auswerteelektronik zu einem einzigen System zusammengefaßt sind. Die integrierte Auswerteelektronik erfüllt dabei eine oder mehrere der folgenden Funktionen bereits lokal, d.h. direkt am Sensor:
- Signalanpassung
- Signalverstärkung
- Störunterdrückung
- Temperaturkompensation
- Kennlinienkorrektur (oft Linearisierung) und
- Kalibrierung

Beispiele hierfür sind ein Drucksensor mit Ausleseelektronik [5], ein Korrekturprozessor für intelligente Sensoren [6], die Einführung von Intelligenz durch Selbsttest und Selbstkalibrierungsfunktionen [7], [8].

Moderne Systeme sind bereits in der Lage lokal eine Muster- und Ereigniserkennung durchzuführen, d.h. Meßwerte zur Merkmalsgewinnung zu transformieren und anschließend zu klassifizieren. Meist können sie über ein Feldbusinterface abgefragt werden. Das von der TU Chemnitz, Lehrstuhl für Informationstechnik vorgestellte System [9) enthält dafür die Funktionsblöcke A/D-Wandler, WALSH-Transformator, Fuzzy Pattern Classifikation, Speicherinterface, PC-Interface, Auswertung und Ausgangsinterface.

Ein anderer Entwicklungszweig lokaler Meßsysteme führte zu den Datenloggern [10], die lediglich Meßdaten aufzeichnen. Sie finden beispielsweise Einsatz im Transportwesen, der Lagerhaltung oder im Kraftfahrzeug in Form des Unfall Daten Systems UDS [11].

Ausgehend vom Stand der Technik liegt der vorliegenden Erfindung die Aufgabe zugrunde, ein kostengünstiges Zustandsüberwachungs- und Diagnosesystem zur kontinuierlichen Überwachung von Maschinen, Anlagen und/oder Baugruppen, insbesondere von elektrischen Antriebssystemen, zu schaffen, das verschiedene physikalische Größen messen kann und nach vorgegebenen Algorithmen unter Einbeziehung von gespeicherten Meß- und Diagnosedaten vorheriger Messungen eine Diagnose des Zustandes der Maschine, Anlage und/oder Baugruppe bzw. des Antriebssystems erstellt. Vorzugsweise wird ein System geschaffen, das sich über Schnittstellen in ein Anlagenüberwachungssystem integrieren läßt, und insbesondere für Wälzlagerdiagnose eine Schadensfrüherkennung mit Prognose der verbleibenden Restbetriebszeit bis zur erforderlichen Anlagenrevision gestattet.

Diese Aufgabe wird erfindungsgemäß durch ein System mit den Merkmalen des Anspruchs 1 erfüllt. Vorzugsweise eignet sich das erfindungsgemäße Mikrosystem zur Verfolgung der Schadensentwicklung der Maschine, Anlage und/oder Baugruppe bzw. des Antriebssystems. Vorzugsweise ist das erfindungsgemäße System als eigenständige Einheit zur automatischen und periodischen Zustandsüberwachung von Maschinen, Anlagen und/oder Baugruppen geeignet.

Vorteilhafte Weiterbildungen sind in den Unteransprüchen beschrieben.

Die kostengünstige Lösung wird gemäß der Erfindung durch die Realisierung des Zustandsüberwachungs- und Diagnosesystem als Mikrosystem erreicht. Nach der in Europa verwendeten Definition [12] lassen sich Mikrosysteme beschreiben als intelligente, miniaturisierte Systeme, die Sensor-, Verarbeitungs- und/oder Aktorfunktionen enthalten. Dabei werden normalerweise zwei oder mehr der folgenden Eigenschaften kombiniert: elektrische, mechanische, optische, chemische, biologische, magnetische oder andere Eigenschaften, die in einen Einzelchip- oder einen Multichip-Hybrid integriert werden.

Das in der Erfindung vorgestellte Mikrosystem dient zur lokalen und automatischen Zustandsüberwachung und Zustandsdiagnose von Maschinen, Anlagen und Baugruppen, insbesondere von Antriebssystemen. Es besteht aus
- einem oder mehreren Sensoren zur Messung von physikalischen Größen, die in direktem oder indirektem Zusammenhang mit dem Betriebszustand der jeweiligen Maschine, Anlage oder Baugruppe stehen oder die für eine Zustandsüberwachung als notwendig erachtet werden,
- Komponenten zur Signalverarbeitung des vom Sensor gelieferten Meßsignals bzw. der von den Sensoren gelieferten Meßsignale, entsprechend der implementierten Auswertealgorithmen und Komponenten zur Speicherung von Meßdaten und / oder durch Auswertealgorithmen gewonnener Daten,
- einer optionalen Zeitzähleinheit, die als Uhr und Kalender bzw. als Zähler eine genaue Zeit und Datumszuordnung der jeweiligen Meß- und Diagnosedaten erlaubt, wobei die Zeit und Datumsangabe bzw. die Zählerangabe mit den Meß- und Diagnosedaten abgespeichert wird/abgespeichert werden kann,
- einer optionalen Kommunikationsschnittstelle zu einer zentralen Leit- oder Überwachungseinrichtung oder zur Datenfernabfrage über entsprechende Kommunikationseinrichtungen,
- einer optionalen Kommunikationsschnittstelle zum lokalen Auslesen von gespeicherten Daten über entsprechende Lesegeräte wie Computer oder Datenlogger,
- einer optionalen lokalen Zustandsinformationsanzeige, die über den Funktionszustand der jeweiligen Maschine, Anlage oder Baugruppe Auskunft gibt.

Das Zustands- und Diagnosesystem ist dabei so gestaltet, daß das System die Meß- und/oder Diagnosesignale und Merkmale zusammen mit einer Zeitinformation u.U. komprimiert oder reduziert direkt im System, also lokal speichert. Dies gestattet die erforderliche Rekonstruktion einer zeitlichen Zustandsänderung, und der Zustand der jeweiligen Maschine, Anlage oder Baugruppe kann entsprechend den implementierten Auswerte- und Kontrollmechanismen lokal klassifiziert werden. Diese Klassifizierung erfolgt nach Kriterien, die den Zustand des Systems beschreiben, z.B. als 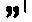 Normal", 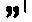 Vorwarnung" oder 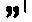 Alarm". Im Falle der Änderung oder einer prognostizierten Änderung des Betriebszustandes von einer Klasse in eine andere Klasse kann das System selbständig an einen mit dem System verbundenen Leitrechner bzw. eine mit dem System verbundene Überwachungs-und/oder Steuerungseinrichtung ein entsprechendes Signal als Information einer (u.U. schwerwiegenden) Veränderung des Betriebszustandes abgeben und/oder lokal ein optisches oder akustisches Signal erzeugen. Somit ist das Mikrosystem als eigenständige Einheit zur automatischen, kontinuierlichen, periodischen und vollständig lokalen Zustandsüberwachung von Maschinen und Baugruppen geeignet.

Bei den Komponenten zur Signalverarbeitung, der optionalen Zeitzähleinheit, der optionalen Kommunikationsschnittstelle zu einer zentralen Leit- oder Überwachungseinrichtung, der optionalen Kommunikationsschnittstelle zum lokalen Auslesen von gespeicherten Daten über entsprechende Lesegeräte wie Computer oder Datenlogger und der optionalen lokalen Zustandsinformationsanzeige kann es sich um Standardbauelemente oder anwendungsspezifische Schaltungen (ASIC's) handeln.

Sämtliche Funktionen können sowohl in einem Chip vereinigt sein oder durch mehrere Bauelemente bzw. Schaltungen bereitgestellt sein, wodurch ein hybrider Aufbau entsteht.

Nach Scheel et al. [13] können die Standardbauelemente oder anwendungsspezifische Schaltungen (ASIC's) in Form von gehäusten oder ungehäusten (Dies) Bauelementen und/oder Baugruppen verwendet werden, wie z.B. DIP, SO, SOD, SOT, MW, EM, TO, SOJ, TEP, V-PAK, CCC, QFP, VSO, VTFP, TCP, TAB, P-LCC, TSOP, SSOP, TSSOP, Multi-TAB, PGA, SQFP, MQFP, P-QFP, FQFP, P-MQFP, P-FQFP, P-TQFP, FC, G-QFP, CSP, BGA, µBGA, TBGA, CBGA, SCGA, DGA, OMPAC, SLICC, MCM, TB-BGA.

Diese Bauelemente werden auf Träger montiert, die sie hauptsächlich mechanisch fixieren und elektrische Verbindungen zwischen den Bauelementeanschlüssen und beispielsweise äußeren Anschlußleitungen bereitstellen. Nach dem Stand der Technik können die Verbindungsleitungen auf einer oder mehreren Ebenen realisiert werden. Speziell gestaltete Flächen oder Ebenen können zum Zweck der Abschirmung (EMV) und Beeinflussung der elektrischen Eigenschaften (z.B. Impedanz) der Verbindungsleitungen dienen. Zusätzlich eingefügte Durchkontaktierungen (Vias) verbessern die Ableitung und Verteilung der entstehenden Wärme im System.

Das Trägermaterial kann starr sein oder flexibel. Ebenso können starre und flexible Träger kombiniert werden (starr-flexibel). Während durch starre Träger eine Flachbaugruppe (2D) entsteht, können flexible Träger durch eine Formung, z.B. Falten oder Rollen dreidimensional gestaltet werden, wie z.B. bei der 3D MID-Technologie. Ebenso erlaubt eine weitere Montage einzelner 2D-Baugruppen eine 2½D- und/oder 30-Baugruppe, wie z.B. bei SCM, Einzel-MCM, Stapel-MCM, TB-BGA [14].

Die Ankontaktierung der Standardbauelemente und/oder anwendungsspezifischer Schaltungen (ASIC's) an den oder die Träger und/oder aneinander kann dabei durch die Durchsteckmontage, Oberflächenmontage, Chip-on-board, TAB, Chip-and-wire und/oder Flip-Chip Technologie erfolgen. Dabei kann Löten, Kleben und/oder Drahtbonden zum Einsatz kommen. Die einzelnen Bauelemente werden im allgemeinen lokal passiviert. Dabei kann beispielsweise ein GlobTop bei Dies oder ein Underfiller bei CSP's oder BGA's verwendet werden.

Die ggf. starke Belastung des Mikrosystems durch Umgebungseinflüsse oder die Meßgrößen selbst grenzt die Einsatzfähigkeit bekannter Systeme stark ein oder führt zu einem frühzeitigen Ausfall der Diagnosesysteme bzw. erhöht drastisch den Aufwand zu einem zuverlässigen Aufbau und damit die Kosten [15].

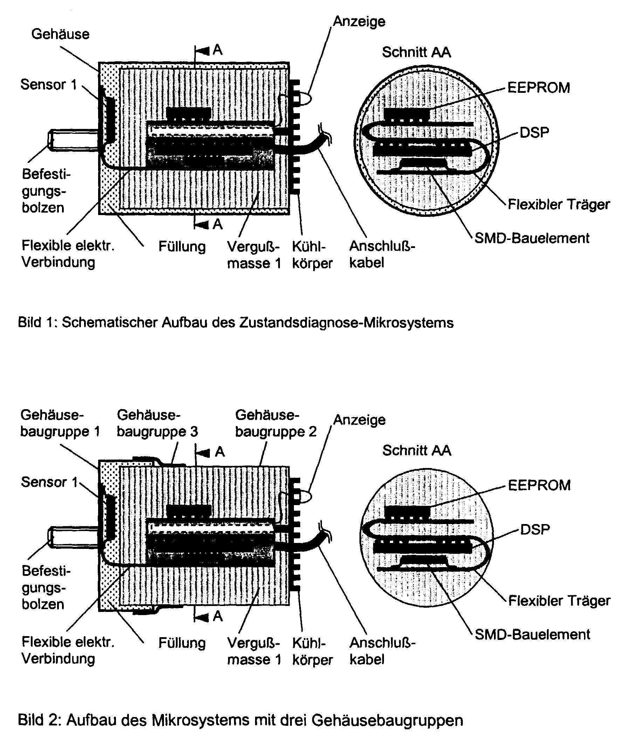

In einer Ausgestaltungsvariante wird erfindungsgemäß daher mindestens ein Sensor mechanisch, thermisch, elektrisch, magnetisch, elektromagnetisch, optisch, akustisch und/oder chemisch über ein Verbindungselement mit der Maschine oder Baugruppe und über flexible Verbindungsleitungen mit dem restlichen, isoliert gelagerten System elektrisch verbunden. Das restliche System ist innerhalb eines Gehäuses komplett in mindestens eine Vergußmasse oder Füllung eingebettet oder über ein Vakuum oder Gas zur Entkopplung vom Gehäuse getrennt gelagert. Ein entsprechender Aufbau ist in **Bild 1** dargestellt.

In einer weiteren Ausgestaltungsvariante besteht das Gehäuse aus mindestens zwei Teilen, wobei die erste Gehäusebaugruppe mit dem Verbindungselement und dem genannten Sensor verbunden ist und sich zwischen dem/den ggf. gehäusten Sensorbauelement(en) und dem restlichen, in der zweiten Gehäusebaugruppe eingebetteten, System ein Hohlraum befindet, der mit einem Gas gefüllt oder evakuiert sein kann oder in den eine zweite, isolierende Vergußmasse oder Füllung eingebracht wird bzw. sein kann.

In diesem Falle können diese beiden Gehäusebaugruppen direkt miteinander verbunden sein, sie können aber auch von einer dritten Gehäusebaugruppe elastisch verbunden werden, z.B. durch einen spiralförmigen Körper (Feder) oder einen schlauchähnlichen Körper. Ebenso kann sich diese dritte Gehäusebaugruppe auch im Innern einer der anderen oder beider Baugruppen befinden, bzw. in der Form einer Hülse zwischen den beiden anderen Gehäusebaugruppen, oder es kann sich bei diesem Bauteil um einen Ring oder eine Scheibe handeln. Beispielhaft ist ein entsprechender Aufbau in **Bild 2** gezeigt

Die Isolierung bewirkt in jeder der o.g. Ausgestaltungsvarianten eine ausreichende mechanische, thermische, elektrische, elektromagnetische, optische, akustische und/oder chemische Entkopplung zwischen dem Gehäuse und dem restlichen System, während das genannte Verbindungselement ein für die zu messende(n) physikalische(n) Größe(n) durchlässiges bzw. diese übertragendes Bauteil z.B. ein entsprechend gestalteter Verschraubungs- oder Verbindungsbolzen, ein Magnet, oder eine für diesen Zweck geeignete Klebstoffschicht ist.

Zur Ableitung der Wärme, die die elektronischen Bauelemente im Inneren des Systems produzieren, kann durch die Gestaltung des Systems ein zusätzlicher Wärmeleiter zur thermischen Ankopplung der Bauelemente an eine Wärmesenke (z.B. das Gehäuse, ein bestimmter evtl. vom restlichen Gehäuse thermisch isolierten Teil des Gehäuses oder ein Kühlkörper, der entsprechend am Gehäuse befestigt ist) im System eingebaut sein. Als Wärmeleiter können z.B. Metall-, Polymer- oder Keramikwolle, -späne, -folie, -schwämme eingesetzt werden. Auch eine Flüssigkeit oder ein Gas als konvektiver oder diffusiver Wärmeleiter ist möglich.

Durch eine besondere Ausgestaltung des Systems kann die Kühlleistung erheblich gesteigert werden. Hierzu wird ein Peltierelement mit seiner kalten Seite als Wärmesenke benutzt Die warme Seite des Peltierelements wird dabei durch entsprechende bekannte Methoden (z.B. Kühlkörper mit optionaler Fremdbelüftung o.ä.) gegengekühlt.

Die Kühlwirkung kann durch ein weiteres Peltierelement, das ebenfalls mit eingebettet wird, verstärkt werden (zweistufige Peltierkühlung).

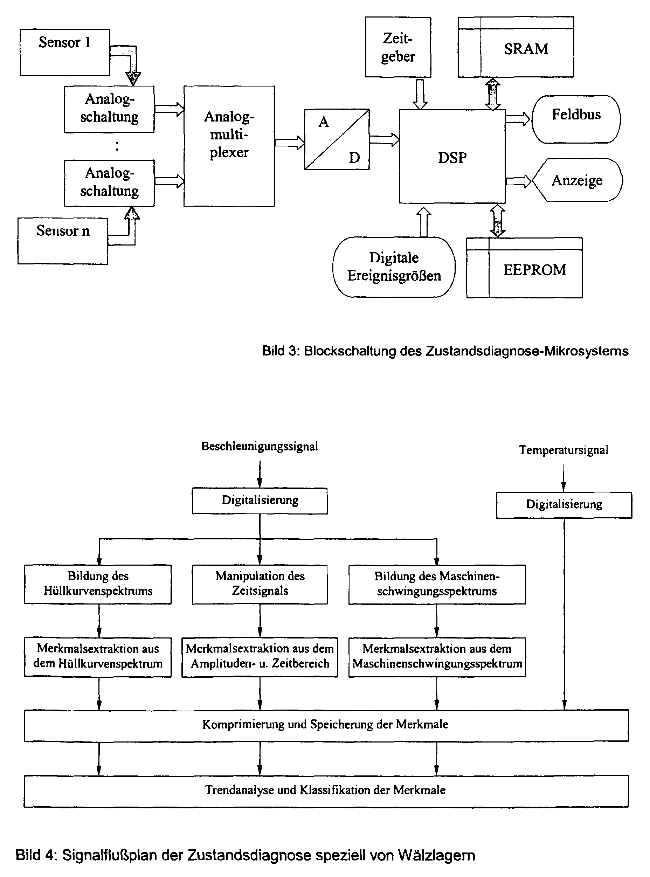

**Bild 3** zeigt das Blockschaltbild des Mikrosystems. Mindestens ein Sensor stellt über eine Analogschaltung, die hauptsächlich eine Anpassung und ggf. eine Verstärkung oder Abschwächung der Signale vornimmt, eine Meßgröße zur Verfügung. Bei den Sensoren kann es sich um aktive oder passive Sensoren für Temperatur, Strom, Spannung, Schwingung (Beschleunigung, Schwinggeschwindigkeit, Schwingweg), Wegsensoren oder Entfernungssensoren, Drehzahlsensoren, Kraftsensoren, Sensoren für Kraft- und Dehnungsgrößen (Zug-/ Druck, Biegung, Torsion), Chemosensoren, Biosensoren, Feuchtesensoren, Strahlungssensoren, photometrische bzw. optische und optoelektronische Sensoren, akustische oder Magnetflußsensoren handeln, die in das Mikrosystem integriert sind.

In einer Ausgestaltungsvariante können an das Mikrosystem auch unterschiedliche konventionelle Sensoren, zusätzliche mikrotechnologisch gefertigte Sensoren, oder bereits in das Antriebssystem integrierte Sensoren angeschlossen werden, wie z.B. Sensoren zur Überwachung der Wicklungstemperatur, der Lagertemperatur oder der Läufertemperatur bei Elektromotoren, Drehgeber oder alle anderen Typen der oben genannten Sensoren. Die Sensorinformationen können auch teilweise drahtlos zum Mikrosystem und/oder einer vorgelagerten Sende-/Empfangsstation übertragen werden.

Die Meßgröße eines jeden Sensors kann einer Signalkonditionierung unterzogen werden, bevor diese von einem Analogmultiplexer selektiert und von einem Analog/Digital (A/D)-Wandler digitalisiert wird. Die Signalkonditionierung kann durch analoge Schaltungen (programmierbare OPV und /oder Potentiometer) oder digitale Schaltungen (Dezimierung, Interpolation) vorgenommen werden und/oder softwaretechnisch durch den nachfolgend genannten Prozessor. Nach der AD-Wandlung gelangen diese Signale dann zu einem digitalen Signalprozessor oder Microcontroller oder Mikroprozessor (im weiteren Prozessor), je nach Ausführung in Form eines gehäusten oder ungehäusten handelsüblichen Bauelementes oder eines ASIC's oder sofort zum Speicher. Der Prozessor kann die Signale dann entweder On-line oder Off-line unter Zwischenspeicherung der Signale im Speicher verarbeiten. Hilfsgrößen der Berechnung können ebenfalls im Speicher abgelegt werden.

In seiner Ausgestaltung kann das System eine oder mehrere EDV-Schnittstellen zur Kommunikation (Steuerung, und Datenübertragung) mit Leitrechnem, Datenloggern oder Überwachungs- und Steuerungseinrichtung besitzen, wie z.B. serielle Schnittstelle nach ITU-T V.28 (EIA-RS 232), ITU-T V.10 (EIA-RS 423), ITU-T V.11 (EIA-RS 422), ISO 8482 (EIA-RS 485), IrDA (Infrared Data Association), HPSIR (Hewlett Packard Serial Infrared), MeterBus, IFSS (Stromschleife), SPI (Serial Programming Interface), IEEE 1394 (Firewire), LVDS (Low Voltage Differential Signalling TIA/EIA-644), USB (Universal Serial Bus), xDSL/ADSL (Digital Subscriber Line), CAN-Bus, Profibus, Ethernet mit TCP/IP ( Ethernet V.2, IEEE-802.3/802.2, ISO 8802/3, ISO 8802/2) oder parallele Schnittstelle nach IEEE 488 (General Purpose Interface Bus), IEEE 1284, SCSI (Small Computer System Interface), Interbus nach EN 50254, Centronix parallel Interface oder es kann für die telefonische Kommunikation über Festnetz oder Mobiltelefonnetz mit einem entsprechenden Modem oder einer Sendeeinheit ausgestattet sein/werden wobei diese über eine Schnittstelle angekoppelt oder direkt in das System integriert sein kann. Weiterhin ist die Nutzung von Energieversorgungsleitungen der Maschine, Anlage oder Baugruppe, die vom Mikrosystem überwacht wird, oder die Energeiversorgungsleitungen des Mikrosystems selbst für Kommunikation und Datenübertragung vorstellbar.

Die Überwachung von Maschinen, Anlagen und Baugruppen, insbesondere eines Antriebssystems erfolgt auf der Basis von Merkmalen, die durch kontinuierliche und/oder periodische Aufnahme eines oder mehrer Sensorsignale, direkte Kontrolle dieser Signale und/oder Analyse von Signalmodellen und/oder mathematischen Modellen der Maschine, Anlage oder Baugruppe und/oder Kennwerten gewonnen werden. Eine Zustandsänderung wird diagnostiziert, wenn Meßsignale, abgeleitete Kenngrößen oder Merkmale entsprechende, anfänglich vorgegebene oder aus (anfänglichen) Meßdaten abgeleitete Werte oder dynamisch aus der zeitlichen Entwicklung bestimmte Werte über- bzw. unterschreiten oder in entsprechend definierten Intervallen liegen. Das System realisiert dabei eine vollständig lokale Meßdatenanalyse und -auswertung, wobei sowohl für die Merkmalsextraktion als auch für die Klassifikation unterschiedliche Verfahren zum Einsatz kommen. Für die Langzeitüberwachung und Trendanalyse werden sowohl Kenngrößen aus dem Zeitbereich als auch aus dem Frequenzbereich herangezogen.

Das System eignet sich somit zur zerstöwngsfreien On-line Überwachung von Maschinen, Anlagen und Baugruppen, die zunehmend an Bedeutung gewinnt [16], [18], [19], [20].

Von seiner Ausgestaltung her ist das System insbesondere geeignet zur Zustandsüberwachung von Wälzlagern, rotierenden Teilen und/oder anderen zeitweise oder permanent schwingenden Baugruppen und Maschinen. In einer Ausgestaltungsvariante werden hierfür ein oder mehrere Beschleunigungssignale aufgenommen und diese über verschiedene Signalpfade ausgewertet, die teilweise in [21], [22], [23] und [24] genannt werden:
- nach charakteristischen Werten im Hüllkurvenspektrum (Überrollfrequenzen eines Außenringschadens, eines Innenringschadens, eines Wälzkörperschadens, Käfigrotationsfrequenz, Wälzkörperspinfrequenz, charakteristische Drehfrequenz z.B. Drehfrequenz der Motorwelle, etc.),
- nach charakteristischen Frequenzen im Spektrum (z.B. beim 2-poligen Asynchronelektromotor Drehfrequenz, doppelte Drehfrequenz, Netzfrequenz, doppelte Netzfrequenz, sowie höhere harmonische von Dreh- und Netzfrequenz und geeigneter Mittelwert des gesamten Schwingungsspektrums),
- ggf. nach flüchtigen Anteilen im Frequenzbereich, deren Extraktion mittels der diskreten Wavelet-Transformation erfolgt und/oder die Ermittlung der Energie-verteilung im Meßsignal durch Zeitfrequenz-Verteilungen und/oder nichtlineare Effekte, die mit Polyspektren und Phasenraum-Methoden ermittelt werden,
- nach Merkmalen im Zeitsignal der Messung (z.B. Minimum, Maximum, Varianz, Spannweite, Median, Mittelwert, gleitender Mittelwert, gleitendes Minimum, gleitendes Maximum, gleitende Varianz, Quantile, Perzentile, Effektivwert, höhere statistische Momente wie z.B. Wölbung (Kurtosis), Schiefe (Skewness), Korrelationskoeffizient, Crest-Faktor, kombinierte Signalkenngrößen wie z.B. der K(t)-Wert,...).

Bei variabler Drehzahl des Antriebs werden die verschiedenen Signalpfade in geeigneter Weise drehzahlgewichtet ausgewertet und so können Merkmale extrahiert werden. Gegebenenfalls kann zusätzlich oder alternativ über Stoßimpulsaufnehmer, sogenannte SPM-Aufnehmer, ein entsprechendes Signal aufgenommen und (bei variabler Drehzahl des Antriebs in geeigneter Weise drehzahlgewichtet) ausgewertet werden und dadurch Merkmale extrahiert werden.

Im Ergebnis einer Zustandsüberwachung und Zustandsdiagnose stehen als Resultat der Signalverarbeitung Diagnosedaten (Merkmale) und die Klassifikationsentscheidung zur Verfügung. Die Merkmale werden dabei hinsichtlich Ihres Augenblickswertes und/oder hinsichtlich der zeitlichen Veränderung des Wertes (1. Zeitableitung, 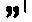 Änderungsgeschwindigkeit") und/oder hinsichtlich der zeitlichen Veränderung der Änderungsgeschwindigkeit (2. Zeitableitung der Diagnosewerte, 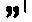 Änderungsbeschleunigung") bewertet und aus den Merkmalen, und/oder Änderungsgeschwindigkeit und/oder Änderungsbeschleunigung erfolgt eine Einordnung in Zustandsklassen des Betriebszustandes (z.B. in 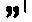 Normal", 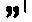 Vorwarnung", 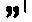 Alarm"), wobei je nach Antriebssystem die Klassifizierung über Auswertung einzelner Diagnosemerkmale und/oder über eine mehrdimensionale Diagnosematrix erfolgt, wobei hierbei auch eine, bei drehzahlvariablen Antrieben in geeigneter Weise drehzahlgewichtete, Lagertemperatur in der Diagnosematrix berücksichtigt wird.

In einer anderen Ausgestaltung des Mikrosystems erfolgt die Diagnose des Betriebszustandes einer Maschine, Baugruppe oder Anlage, insbesondere eines Antriebssystems durch das Mikrosystem dergestalt, daß die Meßwerte oder aus den Meßwerten nach entsprechenden Algorithmen abgeleitete Kenngrößen oder Merkmale entsprechende, anfänglich vorgegebene oder aus anfänglichen Meßdaten abgeleitete Werte oder dynamisch aus der zeitlichen Entwicklung bestimmte Werte über- bzw. unterschreiten oder in entsprechend definierten Intervallen liegen und daß gegebenenfalls aus dieser Diagnose des Betriebszustandes eine Einordnung in Zustandsklassen des Betriebszustandes (z.B. in 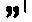 Normal", 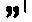 Vorwarnung", 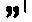 Alarm") vorgenommen wird.

Eine Kombination der oben genannten Ausgestaltungsvarianten zur Gewinnung von Diagnosemerkmalen und Klassifizierungen ist ebenfalls möglich.

Am Beispiel der Zustandsdiagnose von Wälzlagern ist in **Bild 4** ein möglicher, in der Erfindung realisierter, Signalflußplan dargestellt. Anhand der in **Tabelle 1** dargestellten Diagnosemerkmale werden die gewonnen Daten erfaßt und bezüglich ihres Momentanwertes nach Grenzwerten, sowie bezüglich ihrer zeitlichen Entwicklung nach Änderungsgeschwindigkeit und Änderungsbeschleunigung klassifiziert.

Das System realisiert eine vollständig lokale Meßdatenanalyse und -auswertung, wobei sowohl für die Merkmalsextraktion als auch für die Klassifikation unterschiedliche Verfahren zum Einsatz kommen. Für die Langzeitüberwachung und Trendanalyse werden sowohl Kenngrößen aus dem Zeitbereich als auch aus dem Frequenzbereich herangezogen. Die Datenanalyse erfolgt prinzipiell in folgenden Schritten:
- Datengewinnung: Messung, Speicherung
- Datenvorverarbeitung/Merkmalsextraktion: Codierung, Normierung, Standardisierung, Skalierung, Glättung, Filterung, Ermittlung von Kenngrößen und Schwellwerten im Zeit- und Frequenzbereich usw. (siehe Methoden oben)
- Merkmalsauswahl: Anwendung von Korellationskoeffizienten, Regressionsverfahren, Clusterverfahren, Signalverarbeitungsverfahren, statistische Verfahren, automatischen/adaptiven Verfahren usw.
- Klassifikation: Anwendung von Mustererkennungsverfahren, Neuronalen Netzen, Fuzzy Methoden (Fuzzy Cluster-Verfahren, Fuzzy-Pattern-Klassifikation) und Methoden des maschinellen Lernens.

Mit z.B. selbstorganisierenden neuronalen Netzen werden auch Klassifikatoren mit kontinuierlicher Adaption realisiert. Durch die Merkmalsextraktion und die Klassifikation wird gleichzeitig eine Datenreduktion erreicht, was eine Datenhaltung für Langzeitüberwachung und -diagnose ermöglicht. Die genannten Klassifikations-verfahren werden sowohl Online als auch im Batchverfahren angewendet.

Die auf diese Weise gewonnen Meß-, Merkmals- und Diagnosedaten können nun in einem EEPROM oder einem anderen nichtflüchtigen Speicher abgelegt werden. Diese Datensicherung der Meß-, Merkmals- und Diagnosedaten kann direkt oder nach einer, gegebenenfalls verlustfreien, Datenkompression zusammen mit der aktuellen Zeit und Datumsinformation bzw. einer Zählerinformation zur Zeit und Datumszuordnung in geeigneter Weise erfolgen.

Erfindungsgemäß ist das Mikrosystem so in der Lage die Meß- und/oder Diagnosedaten als Zeitinformation direkt im System, also lokal, zu speichern und so den zeitlichen Verlauf der Zustandsänderung der jeweiligen Maschine oder Baugruppe später zu rekonstruieren.

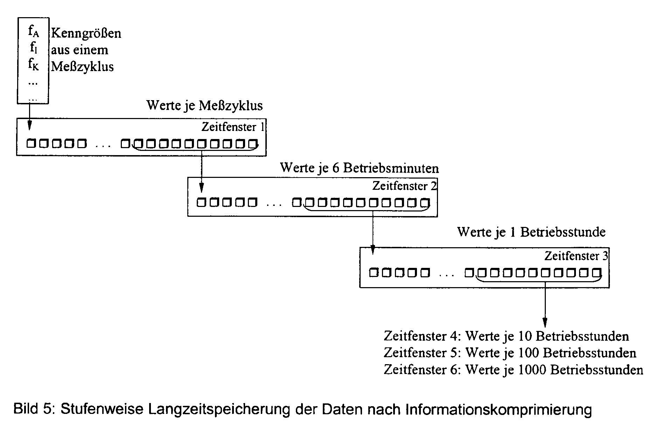

In einer Ausgestaltungsvariante erfolgt die Speicherung aller Daten über ein Mittelungsverfahren und eine damit verbundene Datenreduktion in verschiedenen Zeithorizonten oder Zeitebenen. Die Speicherung kann dergestalt erfolgen, daß die Speicher bzw. Speicherebenen als Ringspeicher oder als FIFO-Speicher (First in First out) oder als frei adressierbarer Speicher angelegt sind, wobei im Falle eines Speicherüberlaufs jeweils die ältesten Daten durch die jeweils aktuellsten Daten überschrieben werden. Die erste Zeitebene über der Abtastrate erfaßt dabei den aktuellen Betriebszustand (z.B. letzte 5 Minuten) mit einem sehr engen Zeitraster (z.B. Sekundentakt). In der zweiten Zeitebene werden die letzten Betriebsstunden (z.B. fünf letzte Betriebsstunden) als gemittelte Werte mit einem gröberen Raster aufgezeichnet (z.B. Mittelung über die jeweils letzten 5 Minuten der ersten Zeitebene ergibt neuen Wert der zweiten Zeitebene). In einer dritten Ebene werden Daten der zweiten Zeitebene (z.B. 5 Tage) wiederum in einem gröberen Raster durch Mittelung aufgezeichnet (z.B. Mittelung über die jeweils letzten 5 Stunden der zweiten Zeitebene ergibt neuen Wert der dritten Zeitebene) usw., bis eine Zeitaufzeichnung über mehrere Jahre hinweg möglich wird, wobei Zeit und Datumsinformationen bzw. Zählerinformationen zur Zeit und Datumszuordnung zusammen mit den Meß- und Diagnosedaten in geeigneter Weise in den einzelnen Zeitebenen mitabgespeichert werden können. In **Bild 5** ist eine derartige stufenweise Langzeitspeicherung der Daten schematisch dargestellt. Die abgespeicherten Informationen dienen als Grundlage für die Prognose für Veränderungen des Betriebszustandes der Maschine oder Baugruppe und so kann eine Trendanalyse vorgenommen werden, die in Trendparameter abgebildet wird.

Im Gegensatz zu den bekannten Diagnosesystemen werden nun erstmalig in einem Mikrosystem die Meß- und Diagnosedaten zum Zweck der lokalen Vorhersage und Meldung der Schadensentwicklung in mehreren Zeitebenen, oder auch -horizonten, gespeichert. Die Vorhersage des Verhaltens basiert auf der Rekonstruktion des zeitlichen Verlaufs der Zustandsänderung eines Antriebssystems in Verbindung mit einer Trendanalyse.

In der weiteren Ausgestaltung des Systems ist es möglich, die lokal gespeicherten Daten für eine Datenabfrage z.B. durch eine Leitwarte nochmals verlustfrei zu komprimieren, um kürzere Datenübertagungszeiten zu realisieren. Prinzipell können alle Daten, die lokal gespeichert oder für die Datenübertragung vorgesehen sind, einer geeigneten, veriustfreien Komprimierung unterzogen werden.

Zur lokalen Information des Systembetreibers besteht die Möglichkeit, das Mikrosystem mit einer optischen Anzeige für den Betriebszustand auszurüsten, die beispielsweise die drei Betriebszuständen 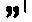 Normal", 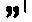 Vorwarnung" und 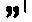 Alarm" in den Ampelfarben darstellt. Eine Mehrfarb-LED ist hier geeignet, ebenso eine Anordnung mehrerer LED's oder andere Anzeigebauelemente, z.B. ein Display für alphanumerische und/oder graphische Ausgaben. Das System kann bei Bedarf auch einen akustischen Signalgeber enthalten oder an einen externen akustischen Signalgeber angeschlossen sein.

Der Zustand der jeweiligen Maschine, Anlage oder Baugruppe wird vom Mikrosystem entsprechend den implementierten Auswerte- und Kontrollmechanismen lokal klassifiziert. Bei entsprechender Ausgestaltung des Systems ist nun weiterhin möglich, im Falle der Änderung oder einer prognostizierten Änderung des Betriebszustandes von einer Klasse in eine andere Klasse selbständig an einen mit dem System verbundenen Leitrechner bzw. eine mit dem System verbundene Überwachungs- und/oder Steuerungseinrichtung ein entsprechendes Signal als Information einer (u.U. schwerwiegenden) Veränderung des Betriebszustandes abzugeben.

Bei entsprechender Gestaltung, wie oben beschrieben, kann das System zusätzlich oder alternativ lokal ein optisches oder akustisches Signal erzeugen, um vor Ort auf die genannte Veränderung des Betriebszustandes aufmerksam zu machen. Zur Lenkung der Aufmerksamkeit auf eine mögliche Zustandsänderung kann z.B. die oben genannte, lokale Zustandsanzeige animiert werden, z.B. die optische Anzeige durch Blinken, Lauflichtverhalten o.ä. und/oder die akustische Anzeige durch eine an- und abschwellende Lautstärke und/oder Frequenzänderung.

Das System kann software- und/oder hardwaretechnisch eine Selbstkalibrierung und/oder Selbstdiagnose nach dem Zuschalten der Betriebsspannung und/oder während des Betriebes periodisch selbständig und/oder ferngesteuert durchführen, wobei ein Ausfall und/oder Funktionsstörungen einer und/oder mehrerer Baugruppen des Systems entsprechend den implementierten Auswerte- und Kontrollmechanismen lokal klassifiziert werden können und das System im Falle der Änderung oder einer prognostizierten Änderung des Funktionszustandeszustandes von einer Klasse in eine andere Klasse selbständig an einen mit dem System verbundenen Leitrechner bzw. eine mit dem System verbundene Überwachungs- und/oder Steuerungseinrichtung ein entsprechendes Signal als Information über eine solche Veränderung abgibt und/oder lokal ein optisches oder akustisches Signal erzeugt.

Das Mikrosystem kann erfindungsgemäß sowohl an einer neu gefertigten Maschine, Anlage oder Baugruppe und insbesondere an einem neuen Antriebssystem eingesetzt werden, aber auch eine Nachrüstung von alten Maschinen, Anlagen, Baugruppen oder Antriebssystemen, die schon längere Zeit im Einsatz sind, ist möglich.

In einer Ausgestaltungsvariante können in das System außerdem Algorithmen der Regelung software- und/oder hardwaretechnisch integriert werden, so daß das Diagnoseergebnis und/oder Signale einer bestimmten Signalverarbeitungsebene und/oder eines Signalpfades zur Steuerung der Maschine, Anlage und/oder Baugruppe genutzt werden.

Für besondere Einsatzzwecke kann das Mikrosystem so gestaltet werden, daß es die für seinen Betrieb erforderliche Energie bzw. Versorgungsspannung(en) lokal gewinnt, z.B. aus einem Magnetfeld, einer Thermobatterie oder mit Solarzellen, und/oder, daß diese in Form einer Batterie oder eines Akkumulators bereitgestellt wird und/oder diese über ein separates Kabel oder eine Kommunikationsleitung zugeführt wird.

Durch seine Ausgestaltung kann das Mikrosystem in jedem Fall so ausgeführt werden, daß das System den einschlägigen, jeweils aktuellen und gültigen deutschen und/oder internationalen Anforderungen für Explosionsschutz entspricht, z.B. der Richtlinie 94/9/EG,Ex-Schutzrichtlinie ATEX 100a.

Die Erfindung beschreibt ein Zustandsüberwachungssystem für Antriebssysteme, das auf der Basis der Mikrosystemtechnik ausgeführt ist und wesentliche Betriebsparameter kontinuierlich erfaßt, entsprechend bestimmter, in der Erfindung beschriebener Merkmale auswertet und daraus eine Zustandsdiagnose und Klassifizierung des Antriebssystems durchführt. Eine Klassifizierung des Betriebszustandes kann z.B. durch Einteilung in die Klassen 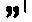 Normal", 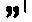 Vorwarnung" und 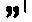 Alarm" erfolgen. Das System eignet sich sowohl zur lokalen, vollkommen autarken Überwachung des Antriebssystems als auch zur Fernüberwachung über Telediagnose oder von einer Leitwarte aus. Das Überwachungssystem erfaßt Daten kontinuierlich in definierten Zeitabständen und speichert diese zur zeitlichen Rekonstruktion einer Schadensentwicklung ab. Für diese Trendspeicherung können die Zeitdaten entsprechend komprimiert oder reduziert werden. Ein spezieller Algorithmus zur Datenreduktion wird vorgeschlagen. Ein Hauptaugenmerk der Erfindung liegt auf der Zustandsüberwachung von Wälzlagern und der Zustandsüberwachung von Elektromotoren. Insbesondere bei Wälzlagern sollen durch geeignete Algorithmen auch verbleibende Restbetriebszeiten abschätzbar sein und die Klassifizierung des Betriebszustandes auch bezüglich dieser verbleibenden Restbetriebszeit erfolgen.

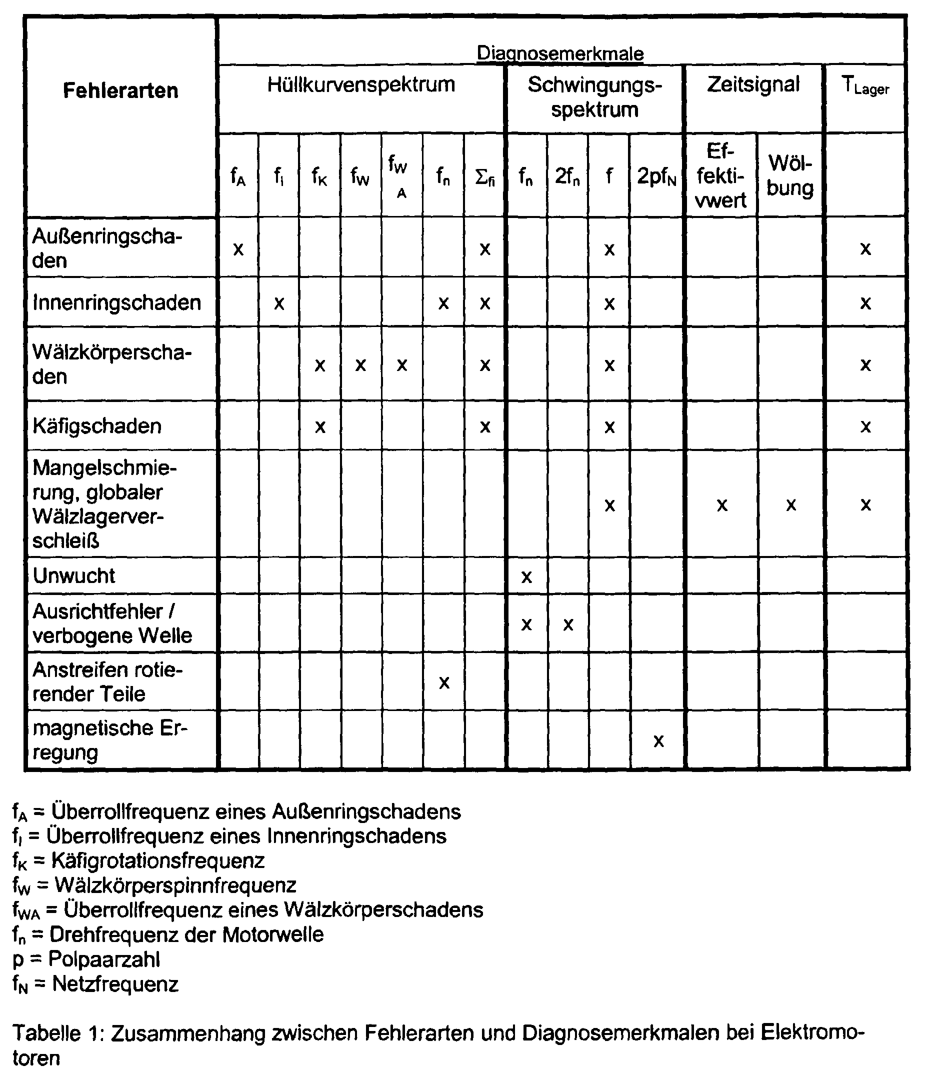

### Literatur

[1] Reissig, W.: Vorbeugen schafft Sicherheit. Eine Studie der Höchst AG, Elektrotechnik, **9**, 1980, 16-22
[2] Bell, R. N. et al.: Report of Large Motor Reliability, Survey of Industrial and Commercial Installations, IEEE Transactions On Industry Applications, Vol. IA-21, **4**, 1985
[3] Mikroprozessorgesteuertes Überwachungssystem für große Elektromotoren, Stadler H. Falk, K., Rösch W., Forschungsbericht T 82-060 Technologische Forschung und Entwicklung ―Elektronik, Bundesministerium für Forschung und Technologie, 1982
[4] Studie zur Realisierbarkeit einer Online-Zustandsüberwachung am Pendelrollenlager des Typs FAG 222 24S.MB, ZAM Mikrosystemtechnik
[5] Dudaicevs, H., Kandler, M., Manoli, Y., Mokwa, W. und Spielgel, E.: Surface Micromachined Pressure Sensors with integrated CMOS readout electronics, Sensors & Actuators A43, 1994, Nr.1-3, p157-163
[6] Dietz, R.: Integrierte Auswerteschaltung für intelligente Sensoren, in Bonfig, K.W. (Hrsg.): Sensoren und Sensorsignalverarbeitung, expert Verlag, 1997
[7] Schneider, G.: Selbstüberwachung und Selbstkalibrierung von Sensoren, in Bonfig, K.W. (Hrsg.): Sensoren und Sensorsignalverarbeitung, expert Verlag, 1997
[8] Bignell, J., White, N.: Intelligent Sensor Systems, IOP Publishing Ltd, 1994
[9] Intelligente Schwingungsüberwachung mit Fuzzy-ASIC's, Information des Lehrstuhls für Schaltungs- und Systementwurf der Technischen Universität Chemnitz, 1998
[10]TELID® 3TS Temperatur/Schock Datenlogger, Produktinformation MicroSensys GmbH, Erfurt 1998
[11]Unfalldatensystem UDS, Produktinformation VDO Kienzle, 1998
[12]Microsystems in the 4th Framework IT, Brussels, Sept. 1996
[13]Scheel, W. (Hrsg.): Baugruppentechnologie der Elektronik, Verlag Technik, Berlin und Eugen G. Leuze Verlag, Saulgau, 1997
[14]Leutenbauer, R., Grossner, V., Schünemann, M., Reichl, H.: The Development of a Top-Bottom-BGA (TB-BGA), Proceedings of the 6^{th} International Conference on Micro System Technologies 98, Potsdam, December 1-3, 1998
[15] Parra, A.: Investigation of the Vibration Characteristics of a Sensor Housing, Students Research Report, TU Dresden, IHM, 1998
[16]Isermann, R. (Hrsg.): Überwachung und Fehlerdiagnose, VDI-Verlag, Düsseldorf 1994
[17]Integrated motor diagnostics apparatus and method of operating same, European Patent Application EP 0 841 574 A2, Date of filing: 07.11.1997, Priority: 07.11.1996 US 7455167
[18]Apparatus and Method for Non-invasive Diagnosis and Control of Motor Operated Valve Condition, United States Patent US 5594175, Date of filing: 06.05.1994, Date of Patent: 14.01.97
[19]Elten, Dagmar: Die Anwendung einer modellgestützten Identifikationsmethode zur Bestimmung elektrischer Parameter von Induktionsmotoren, Dissertation TU Berlin, 1989
[20]Kahler, J. L., Trutt, F.C., Santa Cruz, C.: Incipient Failure Prediction for Electrical Machines, Current Practices and Trends in Mechanical Failure Prevention, Proceedings of the 44th Meeting of the Mechanical Failure Prevention Group, pp 97-109, April 3-5, 1990, Virginia Beach VA
[21]Cempel, C.: Vibroacoustic Condition Monitoring, Ellis Horwood, New York, 1991
[22]Dahlhaus, N., Becker, E.: Wälzlager nicht so früh wechseln ― Neue Erkenntnisse der FLENDER ESAT, Antriebstechnik, Dezember 1998
[23]Lyon, R.H.: Machinery Noise and Diagnostics, Butterworth-Heinemann, Boston 1987
[24]Wirth, R.: Einflüsse auf die Zuverlässigkeit von Schwingungsdiagnoseverfahren an Wälzlagern, Dissertation, TH Zittau 1994

## Patentansprüche

1. Ein Mikrosystem zur Zustandsüberwachung und/oder Zustandsdiagnose von Maschinen, Anlagen und/oder Baugruppen, insbesondere von Antriebssystemen, insbesondere zur lokalen, automatischen, kontinuierlichen und/oder periodischen Zustandsüberwachung und/oder Zustandsdiagnose, mit
einem oder mehreren Sensoren zur Messung von physikalischen Größen, die in direktem oder indirektem Zusammenhang mit dem Betriebszustand der jeweiligen Maschine, Anlage oder Baugruppe stehen oder die für eine Zustandsüberwachung als notwendig erachtet werden, und
Komponenten zur Signalverarbeitung des vom Sensor gelieferten Meßsignals bzw. der von den Sensoren gelieferten Meßsignale, entsprechend der implementierten Auswertealgorithmen und Komponenten zur Speicherung von Meßdaten und / oder durch Auswertealgorithmen gewonnener Daten,
**dadurch gekennzeichnet,**
daß das System die Meß- und/oder Diagnosesignale und/oder Merkmale zusammen mit einer Zeitinformation, vorzugsweise komprimiert und/oder reduziert, direkt im System, also lokal speichert, so daß eine zeitliche Zustandsänderung rekonstruierbar ist, und der Zustand der jeweiligen Maschine, Anlage oder Baugruppe entsprechend den implementierten Auswerte- und/oder Kontrollmechanismen lokal klassifiziert und im Falle der Änderung oder einer prognostizierten Änderung des Betriebszustandes von einer Klasse in eine andere Klasse selbständig an einen mit dem System verbundenen Leitrechner bzw. eine mit dem System verbundene Überwachungs- und/oder Steuerungseinrichtung ein entsprechendes Signal als Information einer Veränderung des Betriebszustandes abgibt und/oder lokal ein optisches oder akustisches Signal erzeugt.

2. Mikrosystem nach Anspruch 1, gekennzeichnet durch eine Zeitzähleinheit, die vorzugsweise als Uhr und Kalender bzw. als Zähler eine genaue Zeit- und Datumszuordnung der jeweiligen Meß- und Diagnosedaten erlaubt, wobei die Zeit- und Datumsangabe bzw. die Zählerangabe vorzugsweise mit den Meßund Diagnosedaten abspeicherbar ist.

3. Mikrosystem nach Anspruch 1 oder 2, gekennzeichnet durch eine Kommunikationsschnittstelle zu einer zentralen Leit- oder Überwachungseinrichtung oder zur Datenfernabtrage über entsprechende Kommunikationseinrichtungen.

4. Mikrosystem nach einem der vorhergehenden Ansprüche, gekennzeichnet durch eine Kommunikationsschnittstelle zum lokalen Auslesen von gespeicherten Daten über entsprechende Lesegeräte, vorzugsweise Computer oder Datenlogger.

5. Mikrosystem nach einem der vorhergehenden Ansprüche, gekennzeichnet durch eine lokale Zustandsinformationsanzeige, vorzugsweise zur Anzeige über den Funktionszustand der jeweiligen Maschine, Anlage oder Baugruppe.

6. Mikrosystem nach dem Oberbegriff des Anspruchs 1,
**dadurch gekennzeichnet,**
daß mindestens ein Sensor mechanisch, thermisch, elektrisch, elektromagnetisch, optisch, akustisch und/oder chemisch über ein Verbindungselement mit der Maschine, Anlage oder Baugruppe und über flexible Verbindungsleitungen mit dem restlichen, isoliert gelagerten System elektrisch verbunden ist und das restliche System innerhalb eines Gehäuses komplett in mindestens eine Vergußmasse oder Füllung eingebettet oder über ein Vakuum oder ein Gas zur Entkopplung vom Gehäuse getrennt gelagert ist.

7. Mikrosystem nach Anspruch 6, gekennzeichnet durch die Merkmale eines oder mehrerer der Ansprüche 1 bis 5.

8. Mikrosystem nach Anspruch 6 oder 7, dadurch gekennzeichnet, daß das Gehäuse aus mindestens zwei Teilen besteht, wobei die erste Gehäusebaugruppe mit dem Verbindungselement und dem obengenannten Sensor verbunden ist und sich zwischen dem/den gegebenenfalls gehäusten Sensorbauelement(en) und dem restlichen, in der zweiten Gehäusebaugruppe eingebetteten, System ein Hohlraum befindet.

9. Mikrosystem nach Anspruch 8, dadurch gekennzeichnet, daß der Hohlraum mit Gas gefüllt ist oder evakuiert ist oder daß in den Hohlraum eine zweite, isolierende Vergußmasse oder Füllung eingebracht ist.

10. Mikrosystem nach einem der vorhergehenden Ansprüche, dadurch gekennzeichnet, daß das Verbindungselement ein für die zu messende(n) physikalische(n) Größe(n) durchlässiges bzw. diese übertragendes Bauteil ist, z.B. ein entsprechend gestalteter Verschraubungsbolzen, Verbindungsbolzen oder Magnet oder eine für den Anwendungszweck geeignete Klebstoffschicht ist.

11. Mikrosystem nach einem der vorhergehenden Ansprüche, dadurch gekennzeichnet, daß die Isolierung eine ausreichende mechanische, thermische, elektrische, elektromagnetische, optische, akustische, biologische und/oder chemische Entkopplung zwischen dem Gehäuse und dem restlichen System bewirkt.

12. Mikrosystem nach einem der vorhergehenden Ansprüche, dadurch gekennzeichnet, daß eine dritte Gehäusebaugruppe die erste und zweite Gehäusebaugruppe miteinander verbindet.

13. Mikrosystem nach einem der vorhergehenden Ansprüche, dadurch gekennzeichnet, daß die dritte Gehäusebaugruppe durch ein rundes, elastisches Material, vorzugsweise einen Schlauch, gebildet wird oder durch eine Spiralkonstruktion, vorzugsweise eine Feder.

14. Mikrosystem nach einem der vorhergehenden Ansprüche, dadurch gekennzeichnet, daß die dritte Gehäusebaugruppe im Innern einer oder beider der anderen Gehäusebaugruppen liegt oder eine oder beide Baugruppen außen umschließt oder sich zwischen den beiden Hauptgehäusebaugruppen beispielsweise in Form eines Ringes, einer Scheibe oder als Hülse, gegebenenfalls mit entsprechenden Dämpfungseigenschaften, befindet.

15. Mikrosystem nach einem der vorhergehenden Ansprüche, dadurch gekennzeichnet, daß es sich bei den eingesetzten Sensoren um aktive und/oder passive Sensoren für Temperatur, Strom, Spannung, Schwingung (Beschleunigung, Schwinggeschwindigkeit, Schwingweg), Wegsensoren oder Entfernungssensoren, Drehzahlsensoren, Kraftsensoren, Sensoren für Kraft- und Dehnungsgrößen (Zug- Druck, Biegung, Torsion), Chemosensoren, Biosensoren, Feuchtesensoren, Strahlungssensoren, photometrische bzw. optische und optoelektronische Sensoren, akustische Sensoren oder Sensoren für Magnetfeld oder magnetischen Fluß handelt.

16. Mikrosystem nach einem der vorhergehenden Ansprüche, dadurch gekennzeichnet, daß an dieses System auch unterschiedliche konventionelle Sensoren, zusätzliche, mikrotechnologisch gefertigte Sensoren oder bereits in die Maschine oder Baugruppe integrierte Sensoren anschließbar sind, wobei es sich hierbei um alle in Anspruch 15 genannten Sensorentypen handeln kann.

17. Mikrosystem nach einem der vorhergehenden Ansprüche, dadurch gekennzeichnet, daß die Sensorinformationen auch zumindest teilweise drahtlos zum Mikrosystem und/oder einer vorgelagerten Sende-/Empfangsstation übertragbar sind.

18. Mikrosystem nach einem der vorhergehenden Ansprüche, dadurch gekennzeichnet, daß es sich bei den Komponenten zur Signalverarbeitung, der optionalen Zeitzähleinheit, der optionalen Kommunikationsschnittstelle zu einer zentralen Leit- oder Überwachungseinrichtung, der optionalen Kommunikationsschnittstelle zum lokalen Auslesen von gespeicherten Daten über entsprechende Lesegeräte wie Computer oder Datenlogger und/oder der optionalen lokalen Zustandsinformationsanzeige um Standardbauelemente oder anwendungsspezifische Schaltungen (ASIC's) handelt.

19. Mikrosystem nach einem der vorhergehenden Ansprüche, dadurch gekennzeichnet, daß die Standardbauelemente und ASIC's in Form von gehäusten oder ungehäusten (Dies) Bauelementen und/oder Baugruppen verwendet werden, wie z.B. DIP, SO, SOD, SOT, MW, EM, TO, SOJ, TEP, V-PAK, CCC, QFP, VSO, VTFP, TCP, TAB, P-LCC, TSOP, SSOP, TSSOP, Multi-TAB, PGA, SQFP, MQFP, P-QFP, FQFP, P-MQFP, P-FQFP, P-TQFP, FC, G-QFP, CSP, BGA, µBGA, TBGA, CBGA, SCGA, DGA, OMPAC, SLICC, MCM, TB-BGA.

20. Mikrosystem nach einem der vorhergehenden Ansprüche, dadurch gekennzeichnet, daß das Mikrosystem als Ein-Chip-Lösung oder hybrid aufgebaut ist, wobei vorzugsweise starre Träger und/oder flexible Träger und/oder eine Kombination von beiden (z.B. starr-flexibel) verwendet werden, wobei vorzugsweise eine Flachbaugruppe (2D) entsteht und/oder durch eine Formung, z.B. Falten oder Rollen, oder weitere Montage einzelner 2D-Baugruppen eine 2 ½ D- und/oder 3D-Baugruppe, z.B. SCM, Einzel-MCM, Stapel-MCM, TB-BGA, 3D MID, wobei die einzelnen Bauelemente vorzugsweise lokal passiviert werden, wobei beispielsweise ein GlobTop bei Dies oder ein Underfiller bei CSP's oder BGA's verwendet wird.

21. Mikrosystem nach einem der vorhergehenden Ansprüche, dadurch gekennzeichnet, daß die Standardbauelemente und/oder ASIC's in Durchsteckmontage, Oberflächenmontage, mit Chip-on-board, TAB, Chip-and-wire und/oder Flip-Chip an den oder die Träger und/oder aneinander mittels Löten, Kleben und/oder Drahtbonden kontaktiert werden.

22. Mikrosystem nach einem der vorhergehenden Ansprüche, dadurch gekennzeichnet, daß die Sensorsignale einer Signalkonditionierung unterzogen werden, wobei diese entweder softwaretechnisch, durch analoge (programmierbare OPV und/oder Potentiometer) oder digitale Schaltungen (Dezimierung, Interpolation) vorgenommen wird.

23. Mikrosystem nach einem der vorhergehenden Ansprüche, dadurch gekennzeichnet, daß das System eine oder mehrere EDV-Schnittstellen zur Kommunikation (Steuerung, und Meßdatenübertragung) mit Leitrechnern, Datenloggern oder Überwachungs- und Steuerungseinrichtung besitzt, wie z.B. serielle Schnittstelle nach ITU-T V.28 (EIA-RS 232), ITU-T V.10 (EIA-RS 423), ITU-T V.11 (EIA-RS 422), ISO 8482 (EIA-RS 485), IrDA (Infrared Data Association), HPSIR (Hewlett Packard Serial Infrared), MeterBus, IFSS (Stromschleife), SPI (Serial Programming Interface), IEEE 1394 (Firewire), LVDS (Low Voltage Differential Signalling TIA/EIA-644), USB (Universal Serial Bus), xDSL/ADSL (Digital Subscriber Line), CAN-Bus, Profibus, Interbus nach EN 50254, Ethernet mit TCP/IP ( Ethernet V.2, IEEE-802.3/802.2, ISO 8802/3, ISO 8802/2) oder parallele Schnittstelle nach IEEE 488 (General Purpose Interface Bus), IEEE 1284, SCSI (Small Computer System Interface), Centronix parallel interface, oder daß das Mikrosystem für telefonische Kommunikation über Festnetz oder Mobiltelefonnetz mit einem entsprechenden Modem ausgestattet ist, wobei vorzugsweise das Modem über eine Schnittstelle angekoppelt und/oder direkt in das System integriert ist, oder daß Energieversorgungsleitungen der Maschine, Anlage oder Baugruppe, die vom Mikrosystem überwacht wird, oder Energieversorgungsleitungen des Mikrosystems selbst für Kommunikation und Datenübertragung in geeigneter Weise genutzt werden.

24. Mikrosystem nach einem der vorhergehenden Ansprüche, dadurch gekennzeichnet, daß die Überwachung von Maschinen, Anlagen und Baugruppen auf der Basis von Merkmalen erfolgt, die durch kontinuierliche und/oder periodische Aufnahme eines oder mehrerer Sensorsignale, direkte Kontrolle dieser Signale und/oder Analyse von Signalmodellen und/oder mathematischen Modellen der Maschine, Anlage oder Baugruppe und/oder Kennwerte gewonnen werden.

25. Mikrosystem nach einem der vorhergehenden Ansprüche, dadurch gekennzeichnet, daß das System zur Zustandsüberwachung von Wälzlagern, rotierenden Teilen, und/oder anderen zeitweise oder permanent schwingenden Baugruppen und Maschinen eingesetzt wird.

26. Mikrosystem nach Anspruche 25, dadurch gekennzeichnet, daß die Überwachung von Wälulagern und/oder rotierenden Teilen durch kontinuierliche Aufnahme eines oder mehrerer Beschleunigungssignale erfolgt und diese Meßsignale über verschiedene Signalpfade
• nach charakteristischen Werten im Hüllkurvenspektrum (Überrollfrequenzen eines Außenringschadens, eines Innenringschadens, eines Wälzkörperschadens, Käfigrotationsfrequenz, Wälzkörperspinfrequenz, charakteristische Drehfrequenz z.B. Drehfrequenz der Motorwelle, etc.) und/oder
• nach charakteristischen Frequenzen im Spektrum (z.B. beim 2-poligen Asynchronelektromotor Drehfrequenz, doppelte Drehfrequenz, Netzfrequenz, doppelte Netzfrequenz, sowie höhere harmonische von Dreh- und Netzfrequenz und geeignter Mittelwert des gesamten Schwingungsspektrums) und/oder
• ggf. nach flüchtigen Anteilen im Frequenzbereich, deren Extraktion mittels der diskreten Wavelet-Transformation erfolgt und/oder die Ermittlung der Energieverteilung im Meßsignal durch Zeitfrequenz-Verteilungen und/oder nichtlineare Effekte, die mit Polyspektren und Phasenraum-Methoden ermittelt werden, und/oder
• nach Merkmalen im Zeitsignal der Messung (z.B. Minimum, Maximum, Varianz, Spannweite, Median, Mittelwert, gleitender Mittelwert, gleitendes Minimum, gleitendes Maximum, gleitende Varianz, Quantile, Perzentile, Effektivwert, höhere statistische Momente wie z.B. Wölbung (Kurtosis), Schiefe (Skewness), Korrelationskoeffizient, Crest-Faktor, kombinierte Signalkenngrößen wie z.B. der K(t)-Wert,...)
(bei variabler Drehzahl des Antriebs in geeigneter Weise drehzahlgewichtet) ausgewertet werden, so daß Merkmale extrahiert werden können und gegebenenfalls zusätzlich oder alternativ über Stoßimpulsaufnehmer, sogenannte SPM-Aufnehmer, ein entsprechendes Signal aufgenommen und (bei variabler Drehzahl des Antriebs in geeigneter Weise drehzahlgewichtet) ausgewertet und dadurch Merkmale extrahiert werden können.

27. Mikrosystem nach einem der vorhergehenden Ansprüche, dadurch gekennzeichnet, daß die Speicherung der Meß- und/oder Diagnosedaten bzw. Merkmale in flüchtigen Speichern, z.B. RAM, und/oder nichtflüchtigen Speichern, z.B. EEPROM, erfolgt, so daß der zeitliche Verlauf der Zustandsänderung eines Antriebssystems später rekonstruierbar ist.

28. Mikrosystem nach Anspruch 27, dadurch gekennzeichnet, daß der zeitliche Verlauf der Zustandsänderung eines Antriebssystems dergestalt rekonstruierbar ist, daß die Meß- und Diagnosedaten direkt gespeichert werden, oder daß diese Daten nach einer verlustfreien Datenkompression gespeichert werden, oder daß diese Daten über ein Komprimierungsverfahren, z.B. ein Mittelungsverfahren, und eine damit verbundene Datenreduktion mit verschiedenen Zeithorizonten gespeichert werden.

29. Mikrosystem nach Anspruch 28, dadurch gekennzeichnet, daß die Speicher bzw. Speicherebenen als Ringspeicher oder als FIFO-Speicher (First in First out) oder als frei adressierbarer Speicher angelegt sind, wobei im Falle eines Speicherüberlaufs jeweils die ältesten Daten durch die jeweils aktuellsten Daten überschrieben werden.

30. Mikrosystem nach einem der Ansprüche 27 bis 29, dadurch gekennzeichnet, daß in der ersten Zeitebene über der Abtastrate den aktuellen Betriebszustand (z.B. letzte 5 Minuten) mit einem sehr engen Zeitraster (z.B. Sekundentakt) erfaßt werden, daß in der zweiten Zeitebene die letzten Betriebsstunden (z.B. fünf letzte Betriebsstunden) als gemittelte Werte mit einem gröberen Raster aufgezeichnet werden (z.B. Mittelung über jeweils letzten 5 Minuten der ersten Zeitebene ergibt neuen Wert der zweiten Zeitebene), daß in einer dritten Ebene Daten der zweiten Zeitebene (z.B. 5 Tage) wiederum in einem gröberen Raster durch Mittelung aufgezeichnet werden (z.B. Mittelung über jeweils letzten 5 Stunden der zweiten Zeitebene ergibt neuen Wert der dritten Zeitebene) usw., bis eine Zeitaufzeichnung über mehrere Jahre hinweg möglich wird, wobei Zeit und Datumsinformationen bzw. Zählerinformationen zur Zeit und Datumszuordnung zusammen mit den Meß- und Diagnosedaten in geeigneter Weise in den einzelnen Zeitebenen mitabgespeichert werden können.

31. Mikrosystem nach einem der vorhergehenden Ansprüche, dadurch gekennzeichnet, daß das System alle Daten, die lokal gespeichert oder für die Datenübertragung vorgesehen sind, einer geeigneten Komprimierung unterzieht.

32. Mikrosystem nach einem der vorhergehenden Ansprüche, dadurch gekennzeichnet, daß die Merkmale hinsichtlich Ihres Augenblickswertes und/oder hinsichtlich der zeitlichen Veränderung des Wertes (1. Zeitableitung, 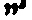 Änderungsgeschwindigkeit") und/oder hinsichtlich der zeitlichen Veränderung der Änderungsgeschwindigkeit (2. Zeitableitung des/der Diagnosewerte, 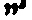 Änderungsbeschleunigung") bewertet werden und daß aus den Merkmalen und/oder der Änderungsgeschwindigkeit und/oder der Änderungsbeschleunigung eine Einordnung in Zustandsklassen des Betriebszustandes (z.B. in 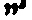 Normal", 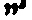 Vorwarnung", 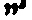 Alarm") vorgenommen wird, wobei je nach Antriebssystem die Klassifizierung über Auswertung einzelner Diagnosemerkmale und/oder über eine mehrdimensionale Diagnosematrix eine Bewertung des Betriebszustandes erfolgt, wobei hierbei vorzugsweise auch eine, bei drehzahlvariablen Antrieben in geeigneter Weise drehzahlgewichtete, Lagertemperatur in der Diagnosematrix berücksichtigt wird.

33. Mikrosystem nach einem der vorhergehenden Ansprüche, dadurch gekennzeichnet, daß das System aus den Meßdaten des/der Sensoren eine Diagnose des Betriebszustandes einer Maschine, Baugruppe oder Anlage, insbesondere eines Antriebssystems durchführt dergestalt, daß die Meßwerte oder aus den Meßwerten nach entsprechenden Algorithmen abgeleitete Kenngrößen oder Merkmale entsprechende, anfänglich vorgegebene oder aus anfänglich Meßdaten abgeleitete Werte oder dynamisch aus der zeitlichen Entwicklung bestimmte Werte über- bzw. unterschreiten oder in entsprechend definierten Intervallen liegen und daß gegebenenfalls aus dieser Diagnose des Betriebszustandes eine Einordnung in Zustandsklassen des Betriebszustandes (z.B. in 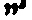 Normal", 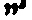 Vorwarnung", 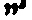 Alarm") vorgenommen wird.

34. Mikrosystem nach einem der vorhergehenden Ansprüche, dadurch gekennzeichnet, daß das System eine vollständig lokale Meßdatenanalyse und - auswertung realisiert, wobei sowohl für die Merkmalsextraktion als auch für die Klassifikation vorzugsweise unterschiedliche Verfahren zum Einsatz kommen, wobei für die Langzeitüberwachung und Trendanalyse vorzugsweise sowohl Kenngrößen aus dem Zeitbereich als auch aus dem Frequenzbereich herangezogen werden, wobei die Datenanalyse dabei vorzugsweise prinzipiell in folgenden Schritten erfolgt:
• Datengewinnung: Messung, Speicherung
• Datenvorverarbeitung/Merkmalsextraktion: Codierung, Normierung, Standardisierung, Skalierung, Glättung, Filterung, Ermittlung von Kenngrößen und Schwellwerten im Zeit- und Frequenzbereich usw. (siehe Methoden oben)
• Merkmalsauswahl: Anwendung von Korellationskoeffizienten, Regressionsverfahren, Clusterverfahren, Signalverarbeitungsverfahren, statistische Verfahren, automatischen/ adaptiven Verfahren usw.
• Klassifikation: Anwendung von Mustererkennungsverfahren, Neuronalen Netzen, Fuzzy Methoden (Fuzzy Cluster-Verfahren, Fuzzy-Pattern-Klassifikation) und Methoden des maschinellen Lernens.

35. Mikrosystem nach Anspruch 34, dadurch gekennzeichnet, daß mit z.B. Selbstorganisierenden Neuronalen Netzen auch Klassifikatoren mit kontinuierlicher Adaption realisiert werden, wobei durch die Merkmalsextraktion und die Klassifikation gleichzeitig eine Datenreduktion erreichbar ist, was eine Datenhaltung für Langzeitüberwachung und -diagnose ermöglicht, wobei die genannten Klassifikationsverfahren vorzugsweise sowohl Online als auch im Batchverfahren angewendet werden.

36. Mikrosystem nach einem der vorhergehenden Ansprüche, dadurch gekennzeichnet, daß das System eine lokale optische und/oder akustische Anzeige besitzt oder eine derartige lokale, externe Anzeige an das Mikrosystem angeschlossen werden kann, und über diese Anzeige der Zustand der überwachten Maschine, Anlage oder Baugruppe, insbesondere des Antriebssystems, entsprechend den implementierten Auswerte- und Kontrollmechanismen dargestellt wird (z.B. eine der Klassen 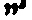 Normal", 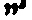 Vorwarnung" oder 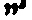 Alarm" zugeordnet wird).

37. Mikrosystem nach Anspruch 36, dadurch gekennzeichnet, daß die optische Anzeige eine Mehrfarb-LED-Anzeige ist (z.B. mit den Farben grün, gelb, rot für die Betriebszustände 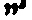 Normal", 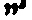 Vorwarnung", 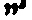 Alarm") oder durch mehrere LED's oder andere Anzeigebauelemente, z.B. ein Display für alphanumerische und/oder graphische Ausgaben zusammengsetzt ist.

38. Mikrosystem nach Anspruch 36, dadurch gekennzeichnet, daß die Anzeige animiert wird, z.B. die optische durch Blinken, Lauflichtverhalten o.ä. und/oder die akustische Anzeige durch eine an- und abschwellende Lautstärke und/oder Frequenzänderung.

39. Mikrosystem nach einem der vorhergehenden Ansprüche, dadurch gekennzeichnet, daß das System software- und/oder hardwaretechnisch eine Selbstkalibrierung und/oder Selbstdiagnose nach dem Zuschalten der Betriebsspannung und/oder während des Betriebes periodisch selbstständig und/oder ferngesteuert durchführt und ein Ausfall und/oder Funktionsstörungen einer und/oder mehrerer Baugruppen des Systems entsprechend den implementierten Auswerte- und Kontrollmechanismen lokal klassifiziert und im Falle der Änderung oder einer prognostizierten Änderung des Funktionszustandes von einer Klasse in eine andere Klasse selbständig an einen mit dem System verbundenen Leitrechner bzw. eine mit dem System verbundene Überwachungs- und/oder Steuerungseinrichtung ein entsprechendes Signal als Information über eine solche Veränderung abgibt und/oder lokal ein optisches oder akustisches Signal erzeugt.

40. Mikrosystem nach einem der vorhergehenden Ansprüche, dadurch gekennzeichnet, daß sich das System fernkonfigurieren, parametrieren und/oder fernsteueren läßt.

41. Mikrosystem nach einem der vorhergehenden Ansprüche, dadurch gekennzeichnet, daß sich dieses System an verschiedenste Maschinen und Baugruppen, insbesondere an Elektromotoren auch nachträglich nachrüsten läßt.

42. Mikrosystem nach einem der vorhergehenden Ansprüche, dadurch gekennzeichnet, daß in dieses System Algorithmen der Regelung software- und/oder hardwaretechnisch integriert sind oder integriert werden können, so daß das Diagnoseergebnis und/oder Signale einer bestimmten Signalverarbeitungsebene und/oder eines Signalpfades zur Steuerung der Maschine, Anlage und/oder Baugruppe genutzt werden.

43. Mikrosystem nach einem der vorhergehenden Ansprüche, dadurch gekennzeichnet, daß mindestens ein Wärmeleiter die durch die elektronischen Bauelemente im Innern des Systems erzeugte und abgegebene Wärme zum Gehäuse oder auch zu einem Kühlkörper leitet, z.B. mittels Metall-, Polymer-oder Keramikwolle, -späne, -folie, -schwämme, über mechanisch-thermischen Kontakt mittels Wärmeleitpaste oder über konvektive und diffusive Prozesse einer Flüssigkeit oder eines Gases.

44. Mikrosystem nach einem der vorhergehenden Ansprüche, dadurch gekennzeichnet, daß zu den Mikrosystem-Bauelementen auch ein Peltier- oder anderes Kühlelement zählen kann über das eine Kühlung der elektronischen Komponenten des Mikrosystems erfolgt.

45. Mikrosystem nach einem der vorhergehenden Ansprüche, dadurch gekennzeichnet, daß das Mikrosystem die für seinen Betrieb erforderliche Energie bzw. Versorgungsspannung(en) lokal gewinnt, z.B. aus einem Magnetfeld, einer Thermobatterie oder mit Solarzellen, und/oder diese in Form einer Batterie oder eines Akkumulators bereitgestellt wird und/oder diese über ein separates Kabel oder eine Kommunikationsleitung zugeführt wird.

46. Mikrosystem nach einem der vorhergehenden Ansprüche, dadurch gekennzeichnet, daß das System durch seine Ausgestaltung den einschlägigen, jeweils aktuellen und gültigen deutschen und oder internationalen Anforderungen und Vorschriften für Explosionsschutz entspricht.
